# EUROPEAN PATENT APPLICATION

(11) **EP 0 798 345 A2**
(43) Date of publication of application: **01.10.1997**
(21) Application number: 97850045.2
(22) Date of filing: 21.03.1997
(51) Int. Cl.: C08L 95/00, C08K 13/02

(54) **Method of preparing fibres and polymer containing bituminous surfacings, and a surfacing mass containing a combination of fibrous and polymeric material**

(30) Priority: 25.03.1996 SV 9601124
(71) Applicant: Laxa Bruks Teknik AB, 414 76 Göteborg (SE)
(72) Inventor: Hartung, Willy, 414 76 Göteborg (SE)
(74) Representative: Avellan-Hultman, Olle

(57) **Abstract**

A method of preparing surfacing masses having a high pressure resistance and a high wear resistance, for instance masses suited as surfacings for streets and roads and comprising a ballast material of mineralic type, for instance a stone material, a fine grain polymer material and a fibre material included in the ballast material and a binder of bitumen type. A surfacing mass prepared according to the method. A combined fibre-polymer material for use in the surfacing mass. The preparation is made in that the ballast material is heated, in that a combined polymer-fibre material, which has been prepared in that a very fine grain polymer material and the fibre material have been brought to stick to each other's surfaces, is supplied and is mixed into the ballast material, and that the binder of bitumen material is heated to substantially the same temperature as that of the ballast material and is admixed thereby forming a final surfacing mass.

## Description

The present invention generally relates to preparation of bituminous surfacing masses, generally referred to as asphalt masses, intended to be used as surfacings of streets and roads and other places where there is desired to obtain a pressure resistant and wear resistant surfacing. In some cases it is also desired that the surfacing mass has a water draining property. The invention also relates to a polymer containing surfacing mass incorporating a combined polymeric and fibrous material.

In previously known processes surfacing masses of the above mentioned type were consisted of a binder in the form of bitumen and a ballast material of stone. It has shown that the wear resistance and also the pressure resistance can be improved by incorporating some type of polymeric material in the surfacing mass, generally in the form of granules, which are allowed to melt while being mixed into the hot bitumen mass. By the addition of polymeric material several advantages are obtained, for instance that the stiffness of the binder is markedly increased, in some cases up to 8-10 times; further that also the softening point of the bituminous mass is increased, in some cases with up to about 20-22°C; further also that the bituminous film becomes more plastic and flexible than in conventional surfacing masses not containing a supply of polymeric material.

It is also known that the supply of mineral fibres to bitumen containing surfacing masses gives other advantages, for instance that it becomes possible to use a greater amount of bituminous binder, whereby an improved securing of the ballast material in the surfacing mass is obtained; further that the mineral fibre creates a type of interconnection between the individual parts of the ballast material which are covered with bitumen, and this markedly increases the inner binding of the surfacing mass and thereby also increases the deformation resistance of the surfacing mass; and that the mineral fibres stabilises the bituminous film covering the particles of the ballast material, whereby there is obtained a reduced compressing of the mass when said mass is being loaded as compared with that of conventional surfacing masses.

Latest experiences prove that great advantages and improvements of the properties of the surfacing mass are obtained by introducing both a polymer material and a fibre material in the surfacing mass.

As polymer material there can be used a variety of materials like styrene and styrene compounds, for instance styrene-butadiene (SBS), styrene-butadiene rubber (SBR), polyethylene, etc.; as fibre material can be utilised for instance cellulose fibres, glass fibres, mineral fibres etc.

A typical surfacing mass having good pressure resistance properties, good wear resistance and good resistance against deformation at long time loading, and suited for surfacing of streets and roads etc. can contain the following, in percent by weight of the surfacing mass:

| | |
|---|---|
| ballast material (aggregate) | 70-85% |
| bituminous material (asphalt) | 5-7% |
| mineralic filler material | 8-22% |
| fibre material | 0.2-0.5% |
| polymer material | 0.15 . 0.45% |

The polymer material generally is supplied in the form of granules or pellets, which material has to be solved in the hot bituminous material. The fibre material, for instance mineral fibres of normal "road fibre" quality can have an average length of 4-6 mm and a diameter of 4-20µm. The fibre material normally is supplied in loose form and is introduced in the form of packs of pre-weighed doses or by being blown into the mass by means of so called dosing machines.

The polymer material and the fibre material have to be admixed using quite different mixing times. For the fibre material it is necessary to use a short admixing time, since a long time mixing may have as a result that fibres become broken, whereas the polymer material, which is generally supplied as granulate, needs a relatively long admixing time in order that the polymer will have time to melt and become homogeneously admixed in the bituminous material.

When making surfacing masses of the above mentioned type - without an addition of polymeric and/or fibrous material - the mixing time for the asphalt mass, including batching and emptying of the mixer, generally is between 30 and 50 seconds. When making surfacing masses having an addition of only fibres said cycle time is not at all increased if a dosing machine is used, and a 5-8 seconds increased time, at a maximum, if the fibres are supplied in a pack. When preparing surfacing masses, whereby the polymer is supplied in the form of pellets or granules, it is necessary to prolong the mixing time by at least 30 seconds, and this should be devasting to the capacity of the asphalt mill. To-day it is therefore preferred to solve the polymer in special ways in special plants, either at the place of the deliverer of the bitumen or at the place of the asphalt mill.

This makes the entire plant expensive and complicated, and special problems appear in case it is desired to prepare certain type of masses having, and certain other types of masses not having an addition of polymeric and/or fibrous materials.

Tests have shown that polymeric materials which have been finely integrated to grain sizes within the area of 2-100µm solve so quickly in the asphalt mixer that it is not necessary to extend the cycle times to any noticeable extent, and by proceeding accordingly it is also possible to add the fibres and the polymer concurrently. If the polymer powder can be made stick to the surfaces of the fibre material it is also avoided that there appears such dust problems, which is, of course, a problem in handling of very fine grain materials.

The basis of the invention therefore has been the idea of preparing a surfacing mass having an addition of a combination of a fibrous and a polymeric material which can be supplied by means of one single dosing machine and which can be admixed so quickly in the hot bituminous material that the fibres of the fibrous material do not become damaged. Such a material can be made in that a very fine grain polymeric powder, which is consequently quickly soluble in the bituminous material, is bound to the surfaces of the fibrous material in connection to the supply of said powder to the bituminous material or before the combined fibre-polymer-material is supplied to asphalt mixer and to the hot bituminous material. The average grain size of the polymeric powder can be 2-100 µm, preferably less than 50 µm, and still more preferably less than 5 µm.

The fibrous material generally has a very great fibre surface. For mineral fibres the surface is about 230 m² per kilogram fibre, and for obtaining a sufficient amount of polymeric material, preferably about 2 parts by weight per 3 parts by weight of fibrous material it is sufficient to cover the fibres with an extremely thin layer of polymeric material, for instance a covering having a thickness of 3 µm corresponding to the normally desired dosings of polymer and fibre material, for instance 1.5-4.5 kilogram polymer and 2.4 kilogram fibre material per 1.000 kilogram asphalt mass. The amount of polymer material in relation to the amount of fibre material in the combined polymer-fibre material can, depending on what effect is desired, be varied between 30-70 % by weight of polymer material to 70-30 % by weight of fibre material, or preferably 30-50 and 50-70 %, respectively.

In order to make it possible for the polymer to become fixed to the surfaces of the mineral fibres, or oppositely to make it possible for the mineral fibres to become fixed to the surfaces of the polymer, and for making it possible for the polymer to quickly melt in the hot bituminous material the polymer should be presented in a very fine grain condition, preferably with a grain size of less than 50-25 µm, or preferably less than 10-5 µm. As mentioned above the fibre may be a cellulose fibre, glass fibre, rock wool fibre, etc. For use in bituminous surfacing materials there is used a fibre of normal "road fibre" quality, which fibre preferably has an average length of 4-6 mm and a fibre diameter of 4-20 µm.

For bringing the fine grain polymeric powder into an intimate contact with the surfaces of the mineral fibres, that is in order to bind the polymer to the mineral fibres, or eventually to bind the mineral fibres to the surface of the polymer there are mainly two different methods which can be used. According to one method the mineral fibre, or the polymer, respectively, is formed with a sticking surface layer, for instance some oil, and the fibre and the fine grain polymeric material are brought into contact with each other in an air flow so that the polymer sticks to and in bound to the fibre surfaces, or the fibres sticks to and are bound to the polymer surfaces, respectively. According to another method the polymeric powder is heated to a temperature above the softening temperature of the polymer, for instance about 50°C above said temperature, and said powder is moved into contact with the fibre material in an air flow, whereby the surface of the polymeric powder melts and the polymer and the fibres bind to each other. Also other methods can be used.

When using polymeric powder having a grain size of for instance 5-20 µm the heated powder will stick to the surfaces of the fibres; when using polymeric powder having a substantially greater grain size, for instance a grain size of between 30 and 50 µm the polymeric particles are greater than the fibre diameter, and in such case, contrary to what is said above, the fibres will stick to the sticky surfaces of the polymer. In both cases the same result is obtained, namely a combined fibre/polymer material.

By said introductory step a fibre material is obtained in which the individual fibres carry a polymeric material on the surfaces thereof, or vice versa, and in which the polymeric material is so easily solved in the hot bitumen material that the total mixing time, in spite of the existence of the polymer/fibre material, is not especially longer than what is the case for surfacing masses not having any polymeric of fibrous material, that mixing time which is as short as between 30 and 50 seconds. Thereby the capacity of the asphalt mill is maintained.

### Example 1

In a full scale plant 1.000 kg of a surfacing mass was prepared, a mass comprising 838 kg of ballast material, about 75% of which had substantially the same average particle size, 100 kg mineralic filler material, 5 kg of a combined polymer-fibre material prepared in accordance with the invention, 3 kg of which was a mineral fibre material and 2 kg of which was a polymer material, and 57 kg bitumen (asphalt). The polymeric material had an average diameter of about 10 µm, and it had been made stick to the surfaces of the mineral fibres by being heated.

The ballast material and the mineralic filler material was heated to a normal mixing temperature for the surfacing material, which is 150-180°C, or generally about 160°C, and the materials were mixed in a conventional mixer for 15 seconds. Parallelly thereto the bitumen material was heated to the same temperature as that of the ballast/filler material, that is to 150- 180°C. The polymer-fibre material was added to the hot ballast/filler material. The bitumen material (the binder, the asphalt) was thereafter immediately added to the mixer, and all ingredients were mixed for another 25 seconds.

Tests proved that the polymer material on the surfaces of the fibres had melted completely and had been intimately mixed with the hot bitumen material. Tests also showed that the fibre material had a substantially unbroken structure, and was also, in other respects, undamaged and was well distributed in the bitumen material.

Comparative load tests made on two test pieces of a roadway, one test piece having a conventional surfacing - without any polymer and fibre material - and the other piece made in accordance with the present example, proved - that the surfacing of the invention had a pressure resistance which was about 20% higher than that of the convention surfacing;
- that the surfacing according to the invention maintained its surfacing level substantially unchanged when being loaded with a test weight for 10 days, whereas the convention surfacing became a 4% less height level during the same test period;
- and that the surfacing according to the invention proved to have a noticeable higher coefficient of friction than the conventional surfacing mass.

The example indicates several advantages with respect to preparation and use of the surfacing mass made in accordance with the invention as compared with conventional surfacing masses. The example also shows that it is possible to keep the mixing time for the entire mass substantially less than what would have been the case if the polymer material and the fibre material had been added separately from two different dosing apparatus.

For finding out what amounts of fibre material and polymer material, respectively, will give the optimum result when using a fibre material which, on the surface thereof, is covered with a polymeric powder, as described above, the following example was made.

### Example 2

The same process as in the above example 1 was repeated, but for the difference that the supply of polymer-fibre material was increased by about 20% to 6 kg, corresponding to 3.6 kg fibre and 2.3 kg polymer. It could be noted that some improved pressure resistance was obtained, and also that the surfacing mass had a substantially improved ability to stand loads for long times.

### Example 3

The same method was repeated as that of example 1, but for the difference that the amount of polymer-fibre material was increased by 50% to 7.5 kg, corresponding to 4.5 kg fibre and 3.0 kg polymer. There could not be seen any noticeable increase of the pressure resistance as compared with the result of example 2, but the surfacing mass shows a slightly increased ability to stand long time loading. It can thereby be stated that the upper limit for the combined polymer-fibre material supply was about 0.7% of the total surfacing mass, corresponding to about 12% of the amount of bitumen.

### Examples 4, 5, 6

Correspondingly it was examined what is the least optimum amount of the combined polymer-fibre material, whereby the amount of fibre material was reduced, as compared to what is stated in example 1, by 20% and by 50%, respectively. The examples only show an insignificantly impaired result at a reduction by 20% but a very obvious impaired result at a reduction by 50%.

It could thereby be established that the lower limit for the optimum amount of the addition of polymer-fibre material is about 0.4% as calculated on the total weight of the surfacing mass, corresponding to 8% of the amount of bitumen.

### Examples 7, 8, 9, 10

For investigating what effect is obtained when the relationship between the amount of polymer and the amount of fibre material is changed four different sets of combined polymer-fibre material were prepared. In example 1 the relationship polymer/fibre is 0.66. The four alternative materials were varied so that the relationship
- in example 7 was 0.59 (-10% polymer)
- in example 8 was 0.53 (-20% polymer)
- in example 9 was 0.73 (+10% polymer), and
- in example 10 was 0.79 (+20% polymer).

As expected a reduction of the amount of polymer as compared with the amount of fibre material resulted in an increase of the stiffness of the bitumen material, a reduction of the softening point of the bitumen material and a reduction of the flexibility of the bitumen material. Correspondingly the stepwise increase, according to examples 9 and 10, of the amount of polymer in relation to the amount of fibre resulted in a change in the opposite direction of the properties of the bitumen material.

The best relationship between the amount of polymer and the amount of fibre material for a material suited as a road surfacing was judged to be 2/3.

### Examples 11, 12, 13

For finding out the effect of varying particle size of the polymer material the following examples 11, 12 , 13 were made.

In the above example 1 the particle size of the polymer material was about 5-10 µm. In example 1 1 there was used a polymer material having a particle size of 20 µm, in example 12 the particle size was 30 µm, and in example 13 the particle size was 50 µm.

By a microscopical examination it could be established that an increasing diameter of the polymer material resulted in an increased structural change in the sense that the fibres stick to the polymer rather than that the polymer sticks to the fibres. There could not be observed any impaired properties of the ready surfacing mass. The only difference was that the temperature of the mixture and the mixing time for polymer and fibres has to be slightly increased.

By the treatment of the fibre material as mentioned above, whereby an extremely fine grain polymer material is bound directly to the surfaces of the fibre material, or the fibre material is bound directly to the surfaces of the polymer material several advantages are obtained:
- it is possible to prepare modern highly stable polymer/fibre modified bitumen surfacings without the need of increasing the mixing time and without using separate bitumen-polymer mixing apparatus;
- it is possible to increase the amount of bitumen and the amount of coarse stone material in the surfacing mass as compared to what has previously has been possible;
- maintained fibre reinforcement in the ready surfacing mass;
- increased pressure resistance in the ready surfacing mass;
- increased deformation resistance of the road surfacing;
- it is also possible to make use of a more simple equipment for preparing the bituminous surfacing mass, using one single dosing apparatus for the polymer-fibre material.

## Claims

1. A method of preparing surfacing masses having a high pressure resistance and a high wear resistance, for instance masses suited as surfacings for streets and roads and comprising a ballast material of mineralic type, for instance a stone material, a binder of bitumen type and a polymer material and a fibre material included in said binder, **characterized**
in that the ballast material is heated and is supplied to a mixing apparatus,
in that a very fine grain polymeric material, especially a polymeric material having an average grain size of less than 50 µm, or preferably less than 5 µm is added and is admixed into the ballast material,
and in that the binder of bitumen material is heated to substantially the same temperature as that of the ballast material and is admixed thereby forming a final surfacing material.

2. A method according to claim 1, **characterized** in that the very fine grain polymeric material and the fibre material are brought to stick to the surfaces of each other thereby forming a combined fibre-polymer material before said material is supplied to the ballast material.

3. A method according to claim 1 or 2, **characterized** in that the fibre material is covered with a sticky substance, for instance an oil, whereupon a powder like polymer material is mixed with said fibre material, preferably in an air borne state, whereby the polymer material sticks to said sticking substance on the fibre surfaces, or alternatively the surface sticking fibre material is brought to stick to the surfaces of the polymeric material.

4. A method according to claim 1 or 2, **characterized** in that the polymer powder is heated to a temperature exceeding the softening temperature of the material, for instance to about 50°C above the softening temperature thereof, and in that said polymer powder is mixed with the fibre material, preferably in an air borne condition, whereby the polymer material and the fibres stick the surfaces of each other.

5. A method according to any of the preceding claims, **characterized** in that the combined polymer-fibre material is prepared having 30-70 % by weight of polymer material and 70-30 % by weight of fibre material.

6. A method according to any of the preceding claims, **characterized** in that the surfacing mass is given a supply of between 0.4 and 0.7 % by weight of the combined polymer-fibre material as calculated on the final surfacing mass.

7. A surfacing mass prepared in accordance with any of the preceding claims, having a high pressure resistance and a high wear resistance, for instance masses suited for surfacing of streets and roads and comprising a ballast material of mineralic type, for instance a stone material, a binder of bitumen type, and polymer material and a fibre material mixed into the mass, **characterized** in that the polymer material is present in the form of a powder having an average particle size of less than 50 µm, or preferably less than 5 µm.

8. A surfacing mass according to claim 7, **characterized** in that the polymer material and the fibre material are in the form of a unit, in which the polymer material and the fibre material are brought to stick the each other's surfaces before said combined polymer-fibre material is added.

9. A surfacing mass according to claim 7 or 8, **characterized** in that the combined polymer-fibre material has a content of polymer of 30-70 % by weight polymer material per 70-30 % by weight of fibre material, for a surfacing mass intended for streets and roads, preferably about 40 % by weight polymer per 60 % by weight fibre material.

10. A surfacing mass according to any of claims 7 - 9, **characterized** in that the combined polymer-fibre material is present in the final surfacing mass in an amount of between 0.4 and 0.7 % by weight as calculated on the final surfacing mass, corresponding to about 8-22 % by weight of the bituminous binder of the mass.
